# EUROPEAN PATENT SPECIFICATION

(11) **EP 0 763 996 B1**
(45) Date of publication and mention of the grant of the patent: **18.02.1998**
(21) Application number: 95920215.1
(22) Date of filing: 05.06.1995
(51) Int. Cl.: A47J 45/06

(54) **CONNECTING ELEMENT WITH A POLYGONAL WELD PORTION FOR CONNECTING A COOKING VESSEL TO A GRIPPING ELEMENT, AND METHOD OF PRODUCING THE CONNECTING ELEMENT**
VERBINDUNGSELEMENT MIT EINER MEHRECKIGEN SCHWEISSSTELLE ZUM VERBINDEN EINES KOCHGERÄTES MIT EINEM GRIFFELEMENT, UND VERFAHREN ZUM HERSTELLEN EINES DERARTIGEN VERBINDUNGSELEMENTS
ELEMENT DE LIAISON A PARTIE SOUDABLE POLYGONALE RELIANT UN RECIPIENT CULINAIRE A UN MANCHE, ET SON PROCEDE DE FABRICATION

(30) Priority: 06.06.1994 IT MI941173
(43) Date of publication of application: 26.03.1997
(73) Proprietor: La Termoplastic F.B.M. S.R.L., 21010 Arsago Seprio (Varese) (IT)
(72) Inventor: Munari, Francesco, I-21010 Cardano al Campo (IT)
(74) Representative: Jorio, Paolo
(86) International application number: IT9500096
(87) International publication number: WO9533400

(56) References cited:
- EP-A- 0 186 000
- DE-A- 2 831 194
- DE-U- 9 207 076
- GB-A- 1 593 103
- GB-A- 2 111 373
- US-A- 4 032 032

## Description

The present invention relates to a connecting element for connecting a cooking vessel, e.g. a pan, to a gripping element, e.g. a handle; the connecting element presenting, at a first end wall, a hole for a screw with which to connect the gripping element, and, at a second end wall opposite the first, a projecting portion designed to melt when the connecting element is welded to the vessel. The present invention also relates to a method of producing such connecting elements.

Connecting elements of the aforementioned type are normally formed from a parallelepiped bar, usually of steel or aluminium, using standard machine tools, e.g. lathes. A connecting element according to the preamble of claim 1 is known from document US-A-4032032.

In addition to being relatively slow and complicated and involving a certain amount of wastage, the above method also presents a further serious drawback: up to now, the projecting portion designed to melt when the connecting element is welded to the vessel has always been circular, owing to the impossibility, on commonly used machine tools, of mass producing connecting elements with projecting portions of any other shape. The size and shape of the projecting portion, however, are extremely important by virtue of the strength of the connection being directly related to the mass that is melted when welding the connecting element to the vessel. In addition to the impossibility of using other than round projecting portions, as yet any increase in the area of the portion requires an increase in welding power which invariably damages the surface coating of the vessel in the weld region - thus making it less attractive to the buyer - and also involves replacing - at considerable cost - the welding units normally used for connecting the gripping element to the vessel.

Finally, the circular shape of known projecting portions invariably results in their at least partially penetrating the wall of the vessel, thus resulting, on the exposed face of the vessel opposite that to which the element is secured, in an unsightly swelling which also makes the vessel less attractive to the buyer.

It is an object of the present invention to provide a connecting element of the aforementioned type, presenting a portion designed to melt when the element is welded to the vessel, and which in turn presents a melting surface of substantially the same area but with a greater perimeter than known portions, for achieving stronger welds for a given welding power.

It is a further object of the present invention to provide a connecting element presenting a projecting portion which, when welding the connecting element, does not damage the walls of the vessel.

It is a further object of the present invention to provide a method of producing such connecting elements, and which provides for reducing production time and cost and involves no wastage.

According to the present invention, there are provided a connecting element and a production method in conformance with the accompanying Claims.

A non-limiting embodiment of the present invention will be described by way of example with reference to the accompanying drawings, in which:
Figure 1 shows an enlarged schematic side view of a connecting element in accordance with the present invention;
Figure 2 shows an enlarged schematic front view of a connecting element in accordance with the present invention;
Figure 3 shows an enlarged schematic side view of a variation of the connecting element according to the present invention.

Number 1 in the accompanying drawings indicates a substantially parallelepiped connecting element presenting, at a first end wall 2, a hole 3 for a screw (not shown) with which to connect a handle (not shown), and, at the other end wall 4, a portion 5 projecting in relation to end wall 4 and designed to melt when the connecting element is welded to the wall of a vessel (not shown). More specifically, in the example shown, end wall 2 is rectangular and is connected to the body of element 1 by beveled corners 2A to assist the fitment on to element 1 of the usual appropriately shaped parts of the gripping element (not shown). Hole 3 presents a portion 3A adjacent to wall 2 and slightly larger in diameter than the remaining portion 3B. More specifically, portion 3A presents the same diameter as a self-threading, e.g. three-lobed, screw (not shown), to assist alignment of the screw when inserted inside the hole.

In the example shown, the other end wall 4 of element 1 slopes in relation to the longitudinal axis L of the element to assist fitment of the element to vessels, such as frying pans, wherein the walls slope in relation to the bottom.

End wall 4 is connected to the top wall of element 1 by a recess 6 to assist grip and automatic alignment of the element.

Projecting portion 5 is truncated-pyramid-shaped with polygonal bases, and, in the example shown, is rectangular. As the thickness of portion 5 in relation to the size of element 1 is negligible so that it may be considered as being substantially two-dimensional, the shape of portion 5 in the following description will be referred to simply as polygonal.

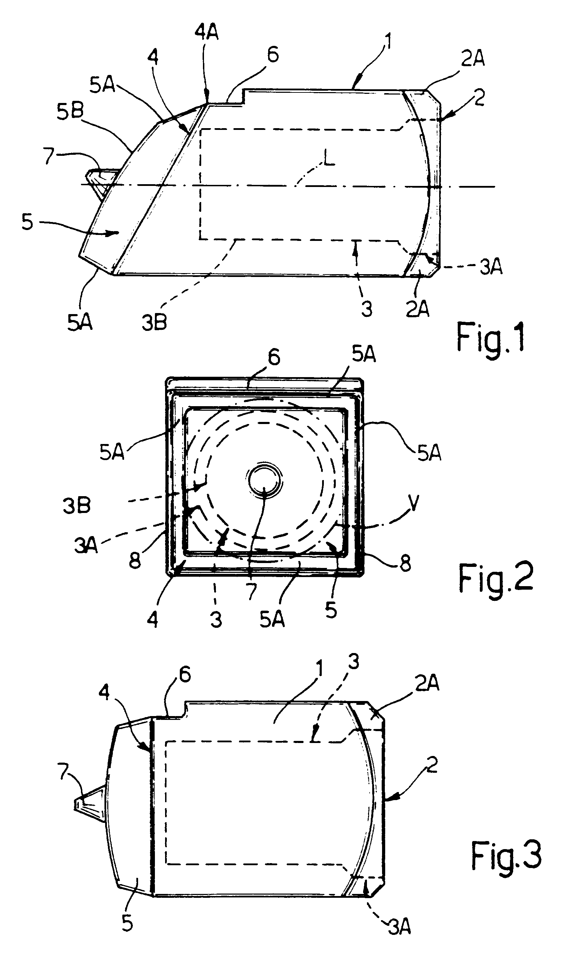

Portion 5 does not extend from the entire surface of end wall 4 which in fact presents an exposed peripheral portion 8 (Figure 2), and portion 5 presents an edge 5A (Figure 1) sloping in relation to wall 4; both of which characteristics are related to the particular method by which the elements are produced according to the invention.

Centrally, portion 5 presents a conventional conical tip 7 for contacting the wall of the vessel and "initiating" welding; and, in the Figure 1 embodiment, the free surface 5B of portion 5 is slightly convex so that portion 5 gradually and at least partly penetrates the vessel, but with less distortion of the wall of the vessel as compared with known portions, by virtue of the convex shape of surface 5B and the polygonal shape of portion 5.

As already stated, portion 5 is melted during welding, and, according to the present invention, presents a much larger perimeter than known circular portions (as shown by way of comparison by the dot-and-dash line V in Figure 2).

For a given area, portion 5 therefore presents a larger perimeter and hence a larger gripping surface as compared with the portions of known connecting elements, so that the element according to the present invention is capable of withstanding greater stress, in particular torsional stress and "shrinkage" by the screw, when the handle is fitted to it.

Portion 5 may be in the form of a polygon other than as shown; and element 1 according to the invention may present parallel end walls 2 and 4 (as shown in Figure 3), i.e. for fitment to vessels, such as saucepans, with vertical walls in relation to the bottom. Portion 5, however, is preferably substantially square, as this provides for better grip for a given surface area as compared with known circular portions.

The connecting element according to the invention is formed by pressing, preferably cold; a portion of a normal metal bar, e.g. of aluminium or steel, being placed inside a mold and pressed once or more to form a connecting element of the type described.

Pressing the connecting element is much faster than using standard machine tools, involves no waste, and therefore provides for reducing production time and cost as compared with known production methods.

What is more, pressing element 1 provides for achieving a polygonal shape of portion 5 and hence a greater peripheral gripping surface as compared with circular portions.

Clearly, changes may be made to the embodiments described and illustrated herein by way of example without, however, departing from the scope of the present invention. In particular, element 1 may be any elongated shape, and portion 5 may be of any shape other than that shown. For example, both the body of element 1 and portion 5 may present a hexagonal section.

## Claims

1. A connecting element for connecting a cooking vessel to a gripping element; the connecting element presenting, at a first end wall (2), a hole (3) for a screw connecting the gripping element, and, at a second wall (4) opposite to said first wall (2), a portion (5) of polygonal section designed to melt when the connecting element is welded to the vessel; characterized in that said portion (5) projects from said second wall (4) and is provided with a free end surface (5B) slightly convex, so that said projecting portion (5), by gradually and at least partly penetrating the wall of said vessel during the welding, reduces the distortion of the vessel wall.

2. A connecting element as claimed in Claim 1, characterized in that said end surface (5B) is provided with a conical tip (7) for firstly contacting said vessel wall and initiating the welding.

3. A connecting element as claimed in Claim 1 or 2, characterized in that said end surface (5B) is provided with an edge (5A) of truncated-pyramid-shape sloping in relation to said second wall (4); said second wall (4) presenting an exposed peripheral portion (8) around said projecting portion (5).

4. A connecting element as claimed in any previous Claim, characterized in that said projecting portion (5) has a substantially square section.

5. A connecting element as claimed in any previous Claim, characterized in that said hole (3) at said first end wall (2) presents a first portion (3A) larger in diameter than a successive portion (3B); the first portion (3A) acting as a lead-in for ensuring alignment of the screw.

6. A connecting element as claimed in any previous Claim, characterized in that said second wall (4) presents a recess (6) connecting it to the top surface of said connecting element to assist grip and automatic alignment thereof.

7. A method of producing a connecting element as claimed in any previous Claim, characterized by the following steps:
- providing a portion of a metal bar of aluminum or steel;
- placing said portion of bar inside a mold;
- press once or more said portion of bar to form the body of said connecting element; and
- forming an axial threaded hole on said first wall (2).

8. A method as claimed in Claim 7, characterized in that said portion of bar is cold pressed.

## Patentansprüche

1. Verbindungselement zum verbinden eines Kochgefäßes mit einem Griffelement, wobei das Verbindungselement an einer ersten Endwand (2) ein Loch (3) für eine Schraube zum Anbringen des Griffelements und an einer der ersten Wand (2) gegenüberliegenden zweiten Wand (4) einen Teil (5) mit mehreckigem Querschnitt aufweist, der so konstruiert ist, daß er schmilzt, wenn das Verbindungselement an das Gefäß geschweißt wird; dadurch gekennzeichnet, daß der Teil (5) von der zweiten Wand (4) aus vorsteht und mit einer ein wenig gewölbten freien Endfläche (5B) versehen ist, so daß der vorstehende Teil (5) die verformung der Gefäßwand verringert, indem er nach und nach und zumindest teilweise in die Wand des Gefäßes während des Schweißens eindringt.

2. Verbindungselement nach Anspruch 1, dadurch gekennzeichnet, daß die Endfläche (5B) so mit einer kegelförmigen Spitze (7) versehen ist, daß sie die Gefäßwand zuerst berührt und das Schweißen einleitet.

3. Verbindungselement nach Anspruch 1 oder 2, dadurch gekennzeichnet, daß die Endfläche (5B) mit einem Rand (5A) mit abgeschnittener Pyramidenform versehen ist, der sich in bezug auf die zweite Wand (4) neigt; wobei die zweite Wand (4) einen freiliegenden Umfangsteil (8) um den vorstehenden Teil (5) aufweist.

4. Verbindungselement nach einem der vorhergehenden Ansprüche, dadurch gekennzeichnet, daß der vorstehende Teil (5) einen im wesentlichen quadratischen Querschnitt hat.

5. Verbindungselement nach einem der vorhergehenden Ansprüche, dadurch gekennzeichnet, daß das Loch (3) an der ersten Endwand (2) einen ersten Teil (3A) mit einem größeren Durchmesser als ein nachfolgender Teil (3B) aufweist; wobei der erste Teil (3A) als Führung zum sicheren Ausrichten der Schraube dient.

6. Verbindungselement nach einem der vorhergehenden Ansprüche, dadurch gekennzeichnet, daß die zweite Wand (4) einen Absatz (6) aufweist, der sie mit der oberen Fläche des Verbindungselements verbindet, um dessen Greifen und selbsttätige Ausrichtung zu unterstützen.

7. Verfahren zum Herstellen eines Verbindungselements nach einem der vorhergehenden Ansprüche, gekennzeichnet durch die folgenden Schritte:
- Vorsehen eines Metallstangenteils aus Aluminium oder Stahl;
- Anordnen des Stangenteils in einer Form;
- einmaliges oder mehrmaliges Pressen des Stangenteils, um den Körper des Verbindungselements zu bilden; und
- Ausbilden eines axialen Gewindelochs an der ersten Wand (2).

8. Verfahren nach Anspruch 7, dadurch gekennzeichnet, daß der Stangenteil kaltgepreßt wird.

## Revendications

1. Élément de liaison destiné à relier un récipient de cuisine à un organe de prise ; l'élément de liaison présentant, au niveau dune première paroi d'extrémité (2), un orifice (3) destiné à une vis faisant la liaison avec l'organe de prise, et, au niveau d'une seconde paroi (4) opposée à ladite première paroi (2), une partie (5) de section polygonale conçue pour fondre lorsque l'élément de liaison est soudé au récipient ; caractérisé en ce que ladite partie (5) fait saillie de ladite seconde paroi (4) et est pourvue d'une surface d'extrémité libre (5B) légèrement convexe, de sorte que ladite partie en saillie (5), du fait qu'elle pénètre progressivement et au moins partiellement dans la paroi dudit récipient pendant le soudage, réduit la déformation de la paroi du récipient.

2. Élément de liaison selon la revendication 1, caractérisé en ce que ladite surface d'extrémité (5B) est pourvue d'une pointe conique (7) destinée à venir d'abord en contact avec ladite paroi du récipient et à commencer le soudage.

3. Élément de liaison selon la revendication 1 ou 2, caractérisé en ce que ladite surface d'extrémité (5B) est pourvue d'une arête (5A) en forme de pyramide tronquée qui descend obliquement par rapport à ladite seconde paroi (4) ; ladite seconde paroi (4) présentant une partie périphérique exposée (8) autour de ladite partie en saillie (5).

4. Élément de liaison selon l'une quelconque des revendications précédentes, caractérisé en ce que ladite partie en saillie (5) présente une section sensiblement carrée.

5. Élément de liaison selon l'une quelconque des revendications précédentes, caractérisé en ce que ledit orifice (3) au niveau de ladite première paroi d'extrémité (2) présente une première partie (3A) dont le diamètre est plus grand que celui d'une partie suivante (3B) ; la première partie (3A) servant de guide pour assurer l'alignement de la vis.

6. Élément de liaison selon l'une quelconque des revendications précédentes, caractérisé en ce que ladite seconde paroi (4) présente un évidement (6) qui la relie à la surface supérieure dudit élément de liaison pour en faciliter la prise et l'alignement automatique.

7. Procédé de fabrication d'un élément de liaison selon l'une quelconque des revendications précédentes, caractérisé par les étapes suivantes consistant à :
◆ fournir une partie d'une barre métallique en aluminium ou en acier ;
◆ placer ladite partie de barre à l'intérieur d'un moule ;
◆ presser une ou plusieurs fois ladite partie de barre pour former le corps dudit élément de liaison ; et
◆ former un orifice axial fileté sur ladite première paroi (2).

8. Procédé selon la revendication 7, caractérisé en ce que ladite partie de la barre est pressée à froid.
